# EUROPEAN PATENT SPECIFICATION

(11) **EP 1 616 516 B1**
(45) Date of publication and mention of the grant of the patent: **14.11.2007**
(21) Application number: 05252885.8
(22) Date of filing: 11.05.2005
(51) Int. Cl.: A47J 39/00

(54) **Heating apparatus for cooking and method for controlling the same**
Kochgerät und Verfahren zu dessen Steuerung
Appareil de cuisson et procédé pour sa commande

(30) Priority: 14.07.2004 KR 2004054842
(43) Date of publication of application: 18.01.2006
(73) Proprietor: SAMSUNG ELECTRONICS CO., LTD., Suwon-si, Gyeonggi-do (KR)
(72) Inventor: Cho, Pung Yeun, Suwon-Si Gyeonggi-Do (KR); Shozo, Kobayashi, Suwon-si Gyeonggi-do 442-742 (KR); Hong, Seok Weon, Yongin-si Gyeonggi-Do (KR); Hwang, Yun Ic, Yeongtong-Gu Suwon-Si Gyeonggi-Do (KR); Ha, Yu Jeub, Gwonseon-Gu Suwon-Si Gyeonggi-do (KR); Kim, Cheol Jin, Suwon-Si Gyeonggi-Do (KR)
(74) Representative: Clark, David James

(56) References cited:
- US-A- 6 157 006
- US-B1- 6 267 046

## Description

The present invention relates to a heating apparatus for cooking, and to methods for controlling the same.

Generally, heating apparatuses for cooking include an electronic oven range, an electric oven range, and a gas oven range, for example. The electronic oven range, e.g., a microwave oven, supplies high-frequency waves generated from a magnetron to the inside of a cooking chamber, thereby cooking foods placed in the cooking chamber using heat generated from the foods themselves. The electric oven range or the gas oven range transmits heat, generated from the operation of an electric heater or the combustion of a gas, to the inside of a cooking chamber, thereby cooking foods in the cooking chamber. Since moisture of the foods is evaporated during cooking, the above heating apparatuses for cooking are disadvantageous in that the foods are easily dried. To address this disadvantage a steam-generating device for preventing foods from being dried and improving cooking effects can be installed in the heating apparatuses for cooking.

EP Patent No. 0277337 discloses a heating apparatus for cooking comprising a steam-generating device having a container shape installed on the bottom of a cooking chamber, and a water tank of a drawer-type installed above the cooking chamber for supplying water to the steam-generating device.

Japanese Laid-open Patent No. 2004-20005 discloses a heating apparatus using high-frequency waves comprising an evaporation tray installed on the bottom of a cooking chamber, a heater for heating water in the evaporation tray, and a water tank installed at a side of the cooking chamber for supplying water to the evaporation tray.

The above heating apparatuses supply water from the water tank to the steam-generating device or the evaporation tray, and heat the water, supplied to the steam-generating device or the evaporation tray, using the heater to generate steam. Steam is then supplied to the cooking chamber.

Since the water tanks of the above-described heating apparatuses for cooking are not exposed to the outside of the heating apparatus, a user cannot check a quantity of residual water in the water tank and it is difficult to determine a time for supplying water to the water tank. Further, the filling of the water tank with water causes the user inconvenience.

When the operation of the above-described heating apparatuses is terminated during cooking using steam, residual water often remains in the steam-generating device. When the heating apparatus is not operated for a long period of time under and the residual water remains in the steam-generating device, the residual water in the steam-generating device can eventually become contaminated and causes hygiene problems. Further, when the replacement of the water filling the water tank of the heating apparatuses is not performed for a long period of time, the inside of the water tank becomes incrusted with harmful biological material and this biological material also causes hygiene problems.

US 6,267,046 describes an apparatus for steaming food contained within a perforated food basket. The apparatus includes a convector that urges steam upward and having an exit that permits steam therethrough and out of the apparatus, a removable lid for sealing the exit, a steam chamber defined within at least one perforated food basket for receipt of food. The at least one perforated food basket is positioned below the convector and above a heater for providing steam to the steam chamber. The apparatus also comprises a receiving portion for receiving a water reservoir, a timer, and a tilt top housing.

It is an aim of preferred embodiments of the present invention to address a disadvantage of the prior art, whether identified herein, or otherwise.

In accordance with the present invention, there is provided a heating apparatus for cooking, comprising: a main body comprising a cooking chamber; a steam-generating device operable to supply steam to the cooking chamber; and a water supply device operable to supply water to the steam-generating device, the water supply device including: a water bucket containing water; a water bucket-supporting device installed on the main body arrangeable to support the water bucket, and including a space for containing an inlet of the water bucket such that the inlet is submerged in water when the water bucket is inserted into the water bucket-supporting device such that the inlet of the water bucket faces a bottom of the bucket-supporting device; a water supply pump operable to supply water from the water bucket-supporting device to the steam-generating device; water supply pipes to in use guide water from the water bucket-supporting device to the steam-generating device; and characterised by further comprising a weight sensor to sense the weight of the water bucket when the water bucket is installed on the water bucket-supporting device.

The water bucket-supporting device may include: a switching member installed on the upper portion of the front surface of the main body arrangeable to open and close the front surface of the main body; and a water container connected to an inner surface of the switching member to receive the inlet of the water bucket when the front surface of the main body is opened, the water container being drainable.

The heating apparatus may also include an inlet switching device, detachably attached to the inlet of the water bucket, including a valve member arranged to open when the water bucket is put into the water container and close when the water bucket is separated from the water container.

The water container may include a supporter installed in the inner surface of the water container for supporting a lower end of the inlet switching device; and a protrusion formed on the supporter arranged to the valve member so as to open the inlet of the water bucket when the water bucket is put into the water container.

The valve member may include a valve plate arranged to move back and forth and thereby open and close a path of the inlet switching device; and a supporting rod, having a designated length and move back and forth, provided with one end fixed to the valve plate for supporting the valve plate.

For a better understanding of the invention, and to show how embodiments of the same may be carried into effect, reference will now be made, by way of example, to the accompanying diagrammatic drawings in which:
FIG. 1 is a perspective view illustrating a front appearance of a heating apparatus for cooking in accordance with an embodiment of the present invention;
FIG 2 is a cross-sectional view of the heating apparatus for cooking of FIG. 1;
FIG. 3 is an exploded perspective view of a steam-generating device of the heating apparatus for cooking of FIG. 1;
FIG. 4 is a cross-sectional view of a water bucket-supporting device, on which a water bucket is installed, of the heating apparatus for cooking of FIG. 1;
FIG. 5 is a cross-sectional view of the water bucket-supporting device, from which the water bucket is separated, and, which is closed by a switching member, of the heating apparatus for cooking of FIG. 1;
FIG. 6 is a cross-sectional view illustrating the installation of an inlet switching device for opening and closing an inlet of the water bucket and a weight sensor of the heating apparatus for cooking of FIG. 1;
FIG. 7 is a perspective view of the water bucket-supporting device of the heating apparatus for cooking of FIG. 1;
FIG. 8 is a flowchart of a process for controlling the generation of steam in the heating apparatus for cooking in accordance with an embodiment of the present invention; and
FIG. 9 is a flowchart of a process for controlling the removal of residual water in the heating apparatus for cooking in accordance with an embodiment of the present invention.

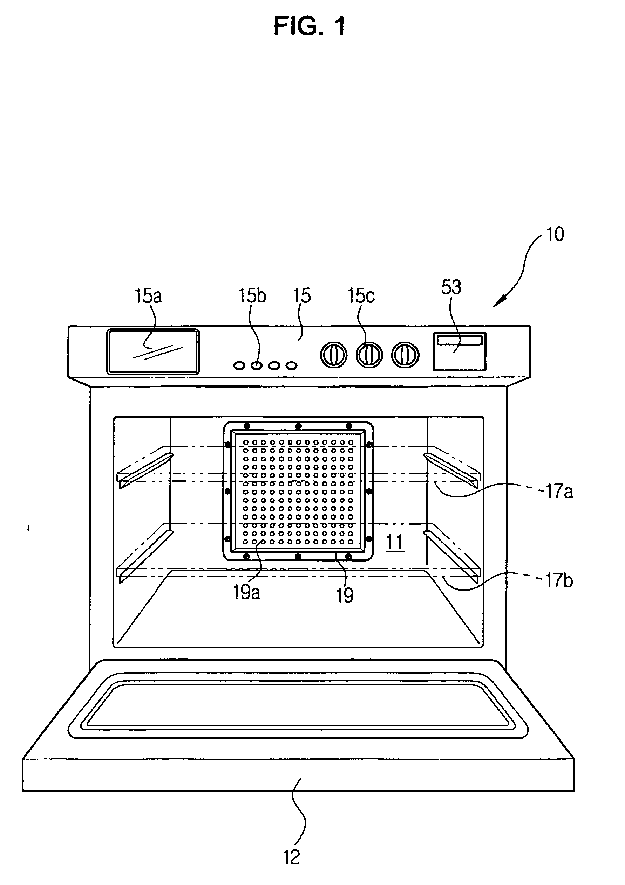

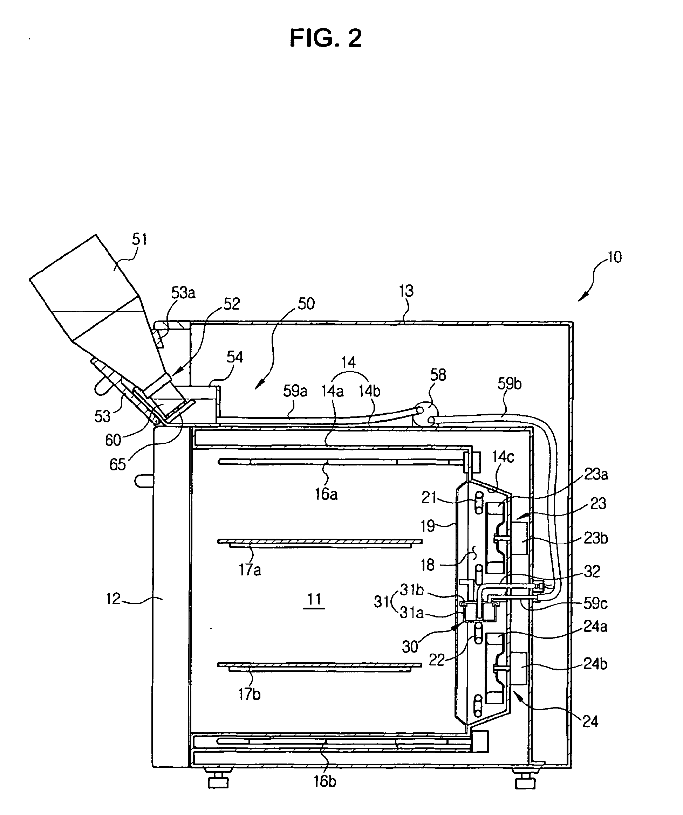

FIGS. 1 and 2show a heating apparatus for cooking (e.g. an oven) in accordance with an embodiment of the present invention. The heating apparatus for cooking includes a main body 10 having a cooking chamber 11 installed therein, and a door 12 vertically rotatably installed (i.e. rotably installed about a horizontal axis) on the front surface of the main body 10 for closing the opened front surface of the cooking chamber 11. The heating apparatus for cooking also includes a hot air chamber 18 installed at the rear portion of the inside of the cooking chamber 11, first and second heaters 21 and 22 installed in the hot air chamber 18, first and second blowing devices 23 and 24 for circulating air of the cooking chamber 11 into the hot air chamber 18, a steam-generating device 30 installed in the hot air chamber 18 for supplying steam to the cooking chamber 11, and a water supply device 50 installed at the upper portion of the cooking chamber 11 for supplying water to the steam-generating device 30.

The main body 10 includes an outer case 13 which may be made of plate iron, and an inner case 14 installed in the outer case 13 such that the outer surface of the inner case 14 is separated from the inner surface of the outer case 13 for forming the cooking chamber 11. The inner case 14 has a first case 14a forming the inner surface of the inner case 14 and a second case 14b forming the outer surface of the inner case 14, which are separated from each other. A space is formed between the first case 14a and the second case 14b, thereby thermally insulating the cooking chamber 11 from the outside. As shown in FIG. 1, an operating unit 15 including a display 15a for displaying the operational state of the heating apparatus for cooking, various operating buttons 15b, and manipulation switches 15c is installed at the upper part of the door 12 on the front surface of the main body 10.

Shelves 17a and 17b for placing foods thereon are respectively installed at upper and lower portions of the inside of the cooking chamber 11. An upper heater 16a and a lower heater 16b for heating the foods placed on the shelves 17a and 17b are respectively installed at the upper and lower portions of the inside of the cooking chamber 11. Here, the upper heater 16a is installed at the upper portion of the inside of the cooking chamber 11, and the lower heater 16b is on the outer lower surface of the cooking chamber 11. That is, the lower heater 16b contacts the outer surface of the bottom of the first case 14a. The above structure protects the lower heater 16b from foreign substances falling from the foods placed in the cooking chamber 11, and transmits heat of the lower heater 16b to the inside of the cooking chamber 11 through the bottom of the first case 14a.

As shown in FIG. 2, the hot air chamber 18 installed at the rear portion of the inside of the cooking chamber 11 is formed by a depression 14c in the rear surface of the first case 14a of a designated depth. A hot air chamber cover 19, provided with a plurality of air vents 19a (in FIG. 1) formed therethrough, is detachably installed on the rear surface of the inside of the cooking chamber 11 such that the hot air chamber cover 19 covers the front surface of the hot air chamber 18. Although the hot air chamber 18 of this embodiment of the present invention is formed at the rear portion of the inside of the cooking chamber 11, the hot air chamber 18 may be formed at either of the side surfaces of the cooking chamber 11.

The first and second blowing devices 23 and 24, for circulating air to the hot air chamber 18, respectively include first and second air blast fans 23a and 24a installed at upper and lower portions of the inside of the hot air chamber 18, and first and second driving motors 23b and 24b installed at the outer surface of the rear portion of the hot air chamber 18 for driving the first and second air blast fans 23a and 24a. The first heater 21 in the hot air chamber 18 is installed adjacent to the outer periphery of the upper first air blast fan 23a, and the second heater 22 in the hot air chamber 18 is installed adjacent to the outer periphery of the lower second air blast fan 24a. When the first and second air blast fans 23a and 24a are operated when the first and second heaters 21 and 22 are operated, the air in the cooking chamber 11 is circulated into the hot air chamber 18 and heated by the first and second heaters 21 and 22. The above circulation of the hot air improves cooking of the foods placed in the cooking chamber 11.

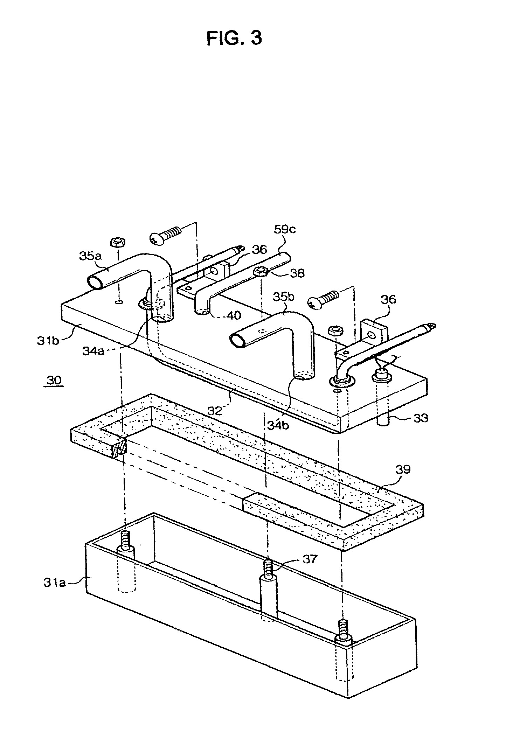

The steam-generating device 30 is installed in the central portion of the hot air chamber 18 between the first heater 21 and the second heater 22. As shown in FIGS. 2 and 3, the steam-generating device 30 includes a heating tank 31 containing a designated quantity of water, a steam-generating heater 32 for heating the water contained in the heating tank 31, and a water level sensor 33 for sensing a water level in the heating tank 31.

The heating tank 31 includes a heating container 31a having a rectangular hexahedral structure provided with an opened upper surface for containing water, and a cover member 31b provided with steam exhaust holes 34a and 34b respectively formed at both sides thereof for closing the opened upper surface of the heating container 31a. Here, the cover member 31b is fixed to the inner rear surface of the hot air chamber 18 through fixing members 36 installed at upper portions of the rear surfaces of both sides thereof, and the heating container 31a is detachably attached to the lower portion of the cover member 31b. For this reason, a plurality of fixing bolts 37 which extend upwardly are fixed to the inside of the heating container 31a. After upper ends of the fixing bolts 37 pass through the cover member 31b, fixing nuts 38 are respectively coupled with the upper ends of the corresponding fixing bolts 37, thereby fixing the fixing bolts 37. A packing member 39 for maintaining an airtight state is interposed between the upper end of the heating container 31a and the cover member 31b.

Both ends of the steam-generating heater 32 are fixed to the cover member 31b such that the main portion of the steam-generating heater 32 can be submerged in water in the heating container 31a, and an end of the water level sensor 33 is fixed to the cover member 31b such that the main portion of the water level sensor 33 can be submerged in the water in the heating container 31a. A water supply hole 40 for supplying water to the heating container 31a therethrough is formed through the cover member 31b, and a water supply pipe 59c of the water supply device 50, which will be described later, is connected to the water supply hole 40. Exhaust guide pipes 35a and 35b having a designated length for guiding the exhaust of steam are respectively connected to steam exhaust holes 34a and 34b formed at both sides of the cover member 31 b.

The steam-generating device 30 generates steam by heating water supplied to the heating tank 31a using the steam-generating heater 32, and supplies the steam to the cooking chamber 11 through the exhaust guide pipes 35a and 35b. The above steam-generating device 30 heats the outer surface of the heating tank 31 using the first and second heaters 21 and 22, thereby increasing efficiency in generating the steam, and uniformly supplies the steam exhausted through the exhaust guide pipes 35a and 35b to the cooking chamber 11 using the air circulating into the hot air chamber 18, thereby improving cooking effects.

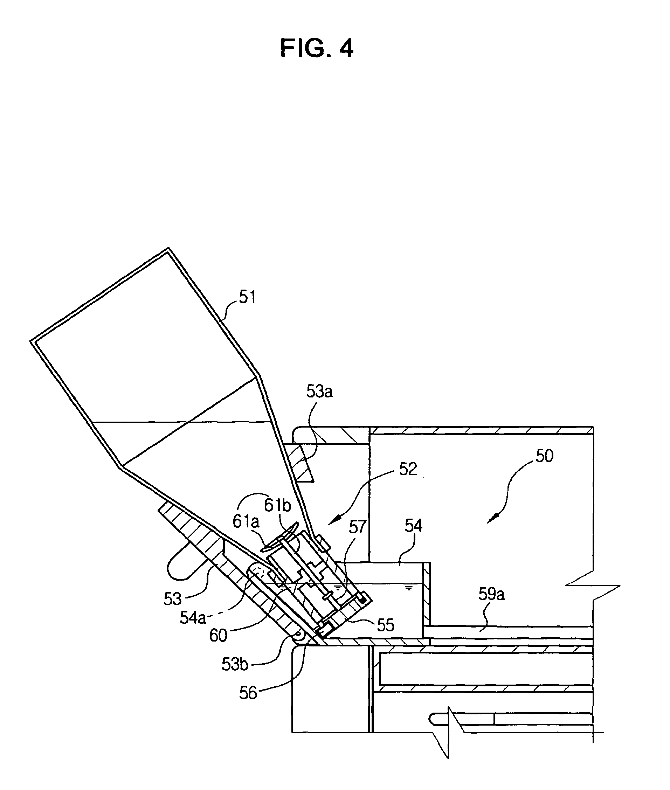

As shown in FIGS. 2 and 4, the water supply device 50 placed in the upper portion of the cooking chamber 11 includes a water bucket 51 having a bottle structure made of a transparent material, a water bucket-supporting device 52 placed on the upper portion of the front surface of the main body 10 for supporting the water bucket 51, a water supply pump 58 for supplying water of the water bucket-supporting device 52 to the heating tank 31 of the steam-generating device 30, and a plurality of water supply pipes 59a, 59b and 59c for connecting the water bucket-supporting device 52 and the water supply pump 58 and connecting the water supply pump 58 and the heating tank 31.

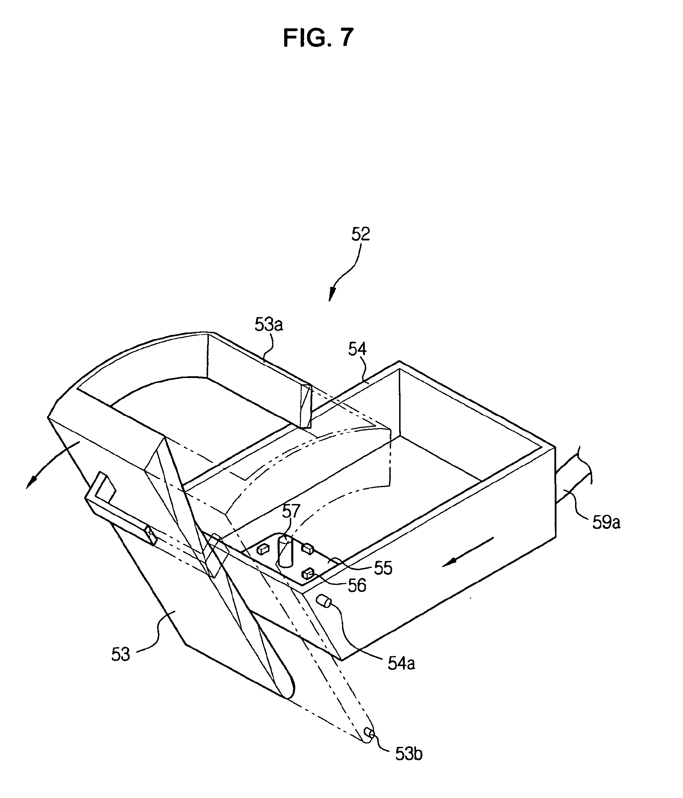

As shown in FIGS. 4, 5 and 7, the water bucket-supporting device 52 includes a switching member 53 installed on the upper portion of the front surface of the main body 10 and rotatably mounted for opening and closing the front surface of the main body 10, and a water container 54 installed on the inner side of the switching member 53 for receiving an inlet of the water bucket 51. The switching member 53 is drawn forwards when the front surface of the main body 10 is opened. Here, a supporting shaft 53b of a lower end of the switching member 53 is rotatably connected to an opening formed in the upper portion of the front surface of the main body 10 such that the switching member 53 is rotated in a vertical direction through a designated angle and opened out of or closed to the front surface of the main body 10. Further, a supporting portion 53a for supporting the water bucket 51 is formed on the upper portion of the inner part of the switching member 53 so that the supporting portion 53a can receive the inlet of the water bucket 51 under the condition that the switching member 53 is opened out of the front surface of the main body 10.

The water container 54 may have a hexahedral structure as shown having an open upper surface forming a space for receiving the inlet of the water bucket 51 when the inlet of the water bucket 51 is introduced into the inside of the switching member 53. A supporting shaft 54a formed on the upper end of the water container 54 is rotatably connected to the switching member 53 such that the water container 54 is drawn forwardly when the switching member 53 is opened out of the front surface of the main body 10. The water supply pipe 59a is connected to the lower end of the rear portion of the water container 54 such that the water in the water container 54 is supplied to the water supply pump 58.

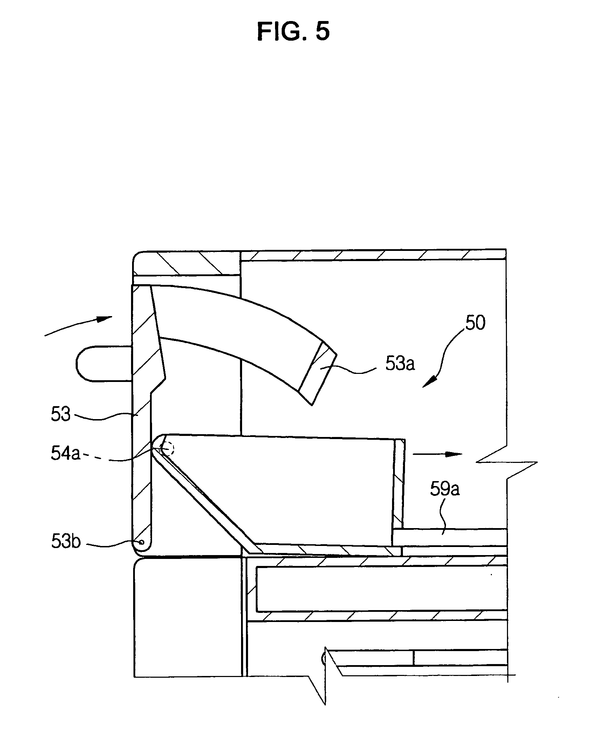

When a user separates the water bucket 51 from the water bucket-supporting device 52, as shown in FIG. 5, the switching member 53 can be closed to the front surface of the main body 10, and when the user installs the water bucket 51 on the water bucket-supporting device 52, as shown in FIG. 4, the water bucket 51 is inserted into the water bucket-supporting device 52 such that the inlet of the water bucket 51 is directed to the lower surface of the water bucket-supporting device 52. Here, since the inlet of the water bucket 51 is introduced into the water container 54 and is then supported, the water of the water bucket 51 flows into the water container 54. Accordingly, a designated quantity of water is collected in the water container 54, and, when the water level in the water container 54 reaches the inlet of the water bucket 51, the introduction of the air into the water bucket 51 is interrupted, thereby preventing the water of the water bucket 51 from flowing into the water container 54.

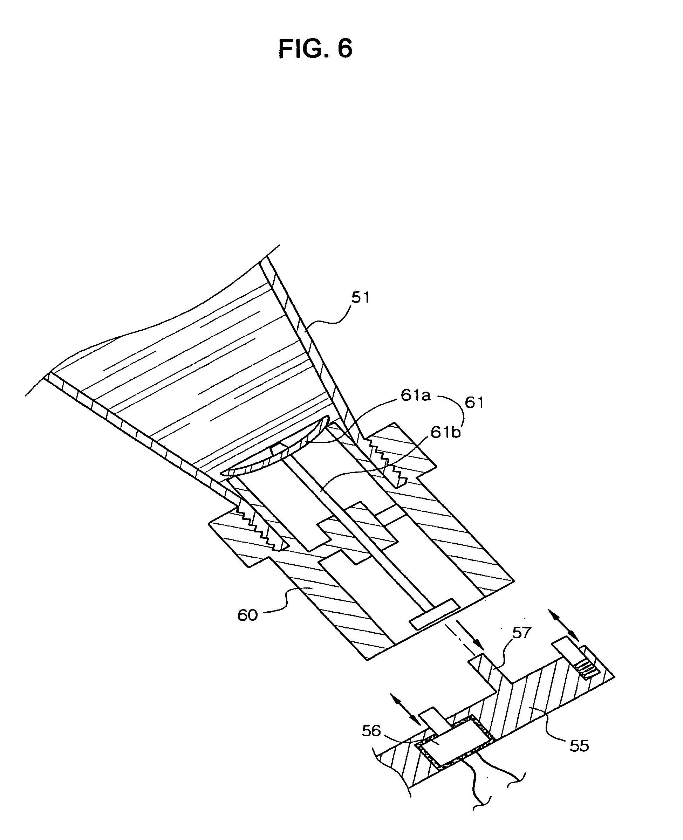

As shown in FIG. 6, the heating apparatus for cooking of the present embodiment also includes an inlet switching device 60 detachably attached to the inlet of the water bucket 51 for opening and closing the inlet of the water bucket 51, and a supporter 55 installed in the inner surface of the water container 54 for supporting the lower end of the inlet switching device 60 when the water bucket 51 is installed in the water bucket-supporting device 52.

The inlet switching device 60 has a cylindrical structure having a designated length, and a valve member 61, for opening the inlet of the water bucket 51 when the water bucket 51 is put into the water container 54 and closing the inlet of the water bucket 51 when the water bucket 51 is taken out of the water container 54, is installed in the inlet switching device 60. The valve member 61 includes a valve plate 61a arranged to move back and forth by a designated distance to open and close the path of the inlet switching device 60, and a supporting rod 61b provided with one end fixed to the valve plate 61a and movably supported in the inlet switching device 60 to support the valve plate 61a. A protrusion 57 is formed on the supporter 55 in the water container 54, and presses the supporting rod 61b of the valve member 61 when the water bucket 51 is put into the water container 54, thereby opening the inlet of the water bucket 51.

The above configuration of the inlet switching device 60 prevents water from flowing from the water bucket 51 when the water bucket 51 filled with the water is erected upside down and put into the water container 54, and allows the inlet of the water bucket 51 to be opened after the water bucket 51 is completely put into the water container 54. The inlet switching device 60 may be installed in conventional beverage containers, thereby allowing the conventional beverage containers to serve as water buckets. For this reason, the inlet switching device 60 could have a size suitable for being installed in the inlets of conventional beverage containers.

As shown in FIG. 6, a weight sensor 56 for sensing the weight of the water bucket 51 is installed in the supporter 55 for supporting the lower end of the inlet switching device 60. The weight sensor 56 determines whether or not the water bucket 51 is installed in the water container 54 and senses the weight of the water bucket 51, thereby sensing the quantity of the water in the water bucket 51.

Hereinafter, the overall operation and control method of the heating apparatus for cooking will be described in detail.

When foods are placed on the shelves 17a and 17b in the cooking chamber 11 and the heating apparatus for cooking is operated, the upper and lower heaters 16a and 16b placed at the upper and lower portions of the cooking chamber 11 and the first and second heaters 21 and 22 placed in the hot air chamber 18 are operated and the first and second air blast fans 23a and 24a are operated. Food placed in the cooking chamber 11 is heated by heat generated from the upper and lower heaters 16a and 16b and hot air circulated through the hot air chamber 18 by the operation of the first and second air blast fans 23a and 24a.

When a user wants to cook food in the cooking chamber 11 using steam supplied to the cooking chamber 11, the user installs the water bucket 51 on the water bucket-supporting device 52 placed at the upper portion of the cooking chamber 11 and manipulates the operating buttons 15b installed on the operating unit 15, thereby operating a steam generation mode. Then, water is supplied from the water container 54 to the heating tank 32 in the hot air chamber 18 by the operation of the water supply pump 58. Steam is generated by heating the steam-generating heater 32 in the heating tank 31, and is then supplied to the cooking chamber 11. Here, the steam is exhausted through the exhaust guide pipes 35a and 35b and uniformly supplied to the inside of the cooking chamber 11 through air circulating into the hot air chamber 18, thereby preventing the foods from being dried and improving cooking.

Water in the heating tank 31 of the steam-generating device 30 of the present embodiment is heated by the first and second heaters 21 and 22 in the hot air chamber 18 as well as the steam-generating heater 32. Accordingly, since the water in the heating tank 31 is rapidly heated and efficiency in generating steam is improved, the steam-generating device 30 employs the steam-generating heater 32 having a low capacity and generates a sufficient quantity of steam.

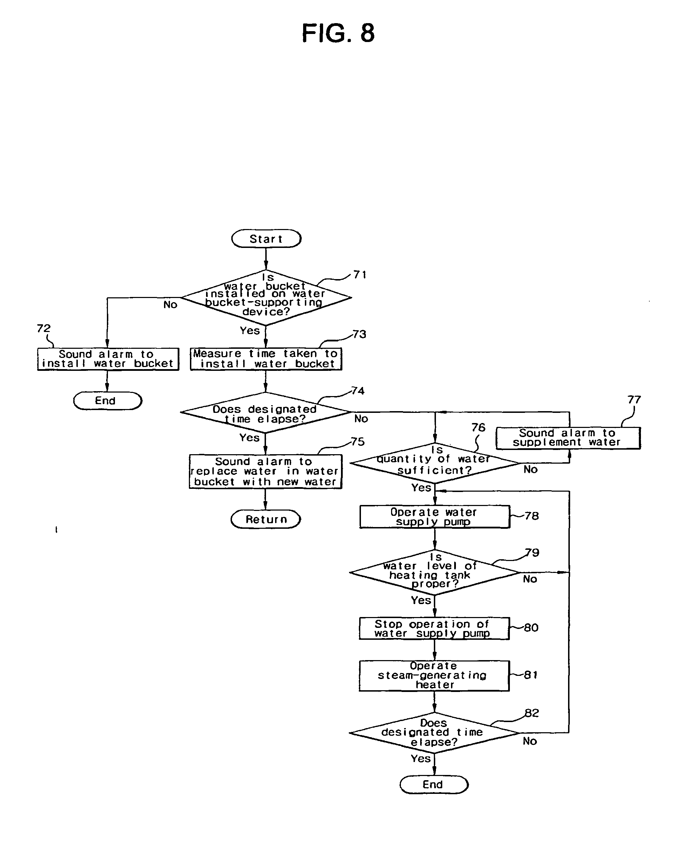

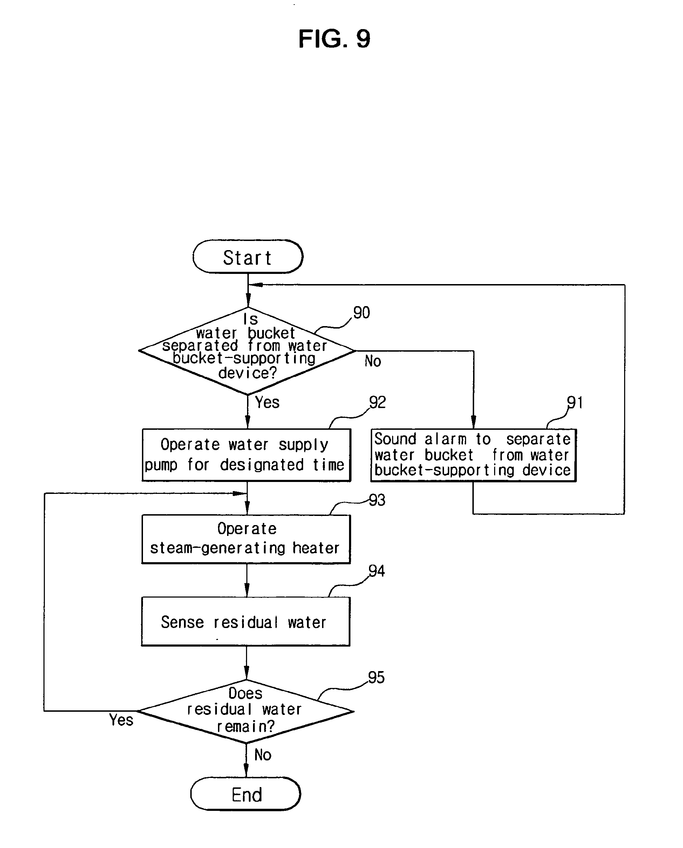

FIG. 8 is a flowchart of a process for controlling the generation of steam in the heating apparatus for cooking in accordance with an embodiment of the present invention. Hereinafter, with reference to FIG. 8, the generation of steam will be described in detail. The process of FIG. 8 is performable by the apparatus of FIGS. 1-7 and is, for ease of explanation, described with concurrent reference to those figures. However, it is to be understood that the process of FIG. 9 is performable by other apparatus.

When a user manipulates a steam-generating button so as to generate steam, a controller (not shown) determines whether or not the water bucket 51 is installed on the water bucket-supporting device 52 using the weight sensor 56 placed in the water container 54 of the water bucket-supporting device 52 (S71). When it is determined that the water bucket 51 is not installed on the water supporting device 52, the controller sounds an alarm to the user (S72), and terminates the process. Here, the alarm is displayed through the display 15a installed on the upper portion of the front surface of the main body 10, or is raised through a separate speaker (not shown) or lamp (not shown). The lamp (not shown) may be arranged to flash on-and-off.

When it is determined that the water bucket 51 is installed on the water bucket-supporting device 52, the controller measures time elapsed from the time when the water bucket 51 is installed in the water container 54 (S73). Thereby, it is possible to know how long it has been since water in the water bucket 51 was replaced with new water. Then, the controller determines whether or not the time elapsed from the installation of the water bucket 51 exceeds a designated time (for example, 72 hours, etc.) (S74). When it is determined that the designated time has elapsed, the controller sounds an alarm to replace the water in the water bucket 51 with new water to the user (S75). Such an alarm informs the user of the deterioration of the water, which may be generated after a long period of time from the installation of the water bucket 51, thereby allowing the user to replace the water in the water bucket 51 with new water. Then the process returns to operation S71.

When it is determined that the designated time has not elapsed, the controller determines whether or not the quantity of the water in the water bucket 51 is sufficient using the weight sensor 56 installed in the water container 54 (S76). Then, when it is determined that the quantity of the water is insufficient, the controller sounds an alarm to supplement water (S77). Conversely, in case that it is determined that the quantity of the water is sufficient, the controller operates the water supply pump 58 so that water is supplied from the water container 54 to the heating tank 31 (S78).

When the water is supplied to the heating tank 31, the controller senses the level of the water in the heating tank 31 using the water level sensor 33 of the heating tank 31, and determines whether or not the sensed level of the water is proper (S79). When the level of the water of the heating tank 58 is improperly low, the controller continuously operates the water supply pump 58, and when the level of the water of the heating tank 58 is proper, the controller stops the operation of the water supply pump 58 (S80) and operates the steam-generating heater 32 so as to generate steam. The controller determines whether or not time designated by the user has elapsed (S82). When it is determined that the designated time has elapsed, the controller terminates the process, and when it is determined that the designated time has not elapsed, the controller continuously performs the water supply (S78) and operates the steam-generating heater 32 (S81).

When the heating apparatus for cooking of the present embodiment does not perform the function of generating steam, the heating apparatus for cooking performs a function of removing residual water through the manipulation of the operating unit 15 so that the water in the water bucket-supporting device 52 and residual water in the heating tank 32 are removed, thereby being hygienically used.

Hereinafter, with reference to FIG. 9, a process for controlling the removal of residual water will be described in detail. The process may be performed by the apparatus of FIGS. 1-7 and is, for ease of explanation, described with reference to those figures. However, it is to be understood that the process can be performed by other apparatus.

When the user manipulates the operating unit 15 for removing the residual water, the controller determines whether or not the water bucket 15 is separated from the water bucket-supporting device 52 using the weight sensor 56 (S90). When it is determined that the water bucket 51 is not separated from the water bucket-supporting device 52, the controller sounds an alarm to separate the water bucket 51 from the water bucket-supporting device 52 (S91). When it is determined that the water bucket 51 is separated from the water bucket-supporting device 52, the controller operates the water supply pump 58 for a designated time so that all of the residual water in the water container 54 is supplied to the heating tank 31 (S92). Here, the operating time of the water supply pump 58 is sufficient to exhaust the water in the water container 54.

After the operation of the water supply pump 58, the controller operates the steam-generating heater 32 in the heating tank 31, thereby evaporating the water in the heating tank 31. During the operation of the steam-generating heater 32, the controller senses the level of the water of the heating tank 31 using the water level sensor 33 (S94) and determines whether or not residual water remains in the heating tank 31 (S95). When it is determined that residual water remains in the heating tank 31, the controller continuously operates the steam-generating heater 32, and when it is determined that the residual water does not remain in the heating tank 31, the controller terminates the operation of the steam-generating heater 32.

The above-described embodiment of the present invention provides a heating apparatus for cooking having a water bucket of a water supply device, which is easily attached to and detached from the heating apparatus for cooking so that water supply is easily achieved, and is preferably made of a transparent material and exposed to the outside so that a user can easily know when water is supplied.

Further, the heating apparatus for cooking of the above-described embodiment of the present invention can completely remove residual water remaining in a steam-generating device and a water bucket-supporting device after steam-cooking is terminated, thereby being used hygienically.

Moreover, when a function of generating steam is performed after a designated time from the installation of the water bucket has elapsed, the heating apparatus for cooking of the present invention sounds an alarm indicating a time for replacing water with new water, thereby being used conveniently and safely.

Although an embodiment of the present invention have been shown and described, the present invention is not limited to the described embodiment. Instead, it would be appreciated by those skilled in the art that changes may be made to the embodiment without departing from the scope of the invention which is defined by the claims.

## Claims

1. A heating apparatus for cooking comprising:
a main body (10) comprising a cooking chamber (11);
a steam-generating device (30) operable to supply steam to the cooking chamber(11); and
a water supply device (50) operable to supply water to the steam-generating device (30), the water supply device (50) including:
a water bucket (51) for containing water;
a water bucket-supporting device (52) installed on the main body (10) arrangeable to support the water bucket (51), and including a space for containing an inlet of the water bucket (51) such that the inlet is submerged in water when the water bucket (51) is inserted into the water bucket-supporting device (52) such that the inlet of the water bucket (51) faces a bottom of the bucket-supporting device (52);
a water supply pump (58) operable to supply water from the water bucket-supporting device (52) to the steam-generating device;
water supply pipes (59) to in use guide water from the water bucket-supporting device (52) to the steam-generating device (30); **characterised by** further comprising a weight sensor (56) to sense the weight of the water bucket (51) when the water bucket is installed on the water bucket-supporting device (52)

2. The heating apparatus for cooking according to claim 1, wherein the water bucket-supporting device (52) includes:
a switching member (53) installed on the upper portion of the front surface of the main body (10) arrangeable to open and close the front surface of the main body; and
a water container (54) connected to an inner surface of the switching member (53) to receive the inlet of the water bucket when the front surface of the main body (10) is opened, the water container (54) being drainable.

3. The heating apparatus for cooking according to claim 2, further comprising an inlet switching device (60), detachably attached to the inlet of the water bucket (51), including a valve member (61) arranged to open when the water bucket (51) is in the water container (54) and close when the water bucket is separated from the water container (54).

4. The heating apparatus for cooking according to claim 3, wherein the water container (54) includes:
a supporter (55) installed in the inner surface of the water container (54) for
supporting a lower end of the inlet switching device (60); and
a protrusion (57) formed on the supporter (55) arranged to press the valve member (61) so as to open the inlet of the water bucket (51) when the water bucket is put into the water container (54).

5. The heating apparatus for cooking according to claim 3 or 4 wherein the valve member (61) includes:
a valve plate (61a) arranged to move back and forth and thereby open and close a path of the inlet switching device(60); and
a supporting rod (61b), having a designated length and moveable back and forth, one end of the supporting rod (61b) being is fixed to the valve plate (61a) so as to support the valve plate (61a).

## Patentansprüche

1. Heizgerät zum Garen mit:
einem Grundkörper (10) mit einer Garkammer (11);
einer Dampferzeugungseinrichtung (30), welche zum Zuführen von Dampf in die Garkammer (11) betreibbar ist; und
einer Wasserzuführeinrichtung (50), welche zum Zuführen von Wasser zu der Dampferzeugungseinrichtung (30) betreibbar ist, wobei die Wasserzuführeinrichtung aufweist:
einen Wasserbehälter (51) zum Aufnehmen von Wasser;
eine an dem Grundkörper (10) angeordnete Wasserbehälterhalteeinrichtung (52), welche zum Halten des Wasserbehälters (51) anordenbar ist und einen Raum zum Aufnehmen eines Einlasses des Wasserbehälters (51) aufweist, so dass der Einlass in Wasser eingetaucht ist, wenn der Wasserbehälter (51) derart in die Wasserbehälterhalteeinrichtung (52) eingebracht ist, dass der Einlass des Wasserbehälters in Richtung eines Bodens der Behälterhalteeinrichtung (52) zeigt;
eine Wasserzuführpumpe (58), welche zum Zuführen von Wasser von der Wasserbehälterhalteeinrichtung (52) zu der Dampferzeugungseinrichtung betreibbar ist; Wasserzuführleitungen (59), welche im Einsatz Wasser von der Wasserbehälterhalteeinrichtung (52) zu der Dampferzeugungseinrichtung (30) führen;
**gekennzeichnet dadurch,**
**dass** dieses weiterhin einen Gewichtssensor (56) aufweist, um das Gewicht des Wasserbehälters (51) zu erkennen, wenn der Wasserbehälter auf der Wasserbehälterhalteeinrichtung (52) angeordnet ist.

2. Heizgerät zum Garen nach Anspruch 1,
wobei die Wasserbehälterhalteeinrichtung (52) aufweist:
ein an einem oberen Bereich der Vorderseite des Grundkörpers (10) angeordnetes Umschaltelement (53), welches zum Öffnen und Schließen der Vorderseite des Grundkörpers gestaltet ist; und
ein mit einer inneren Oberfläche des Umschaltelements (53) verbundener Wassercontainer (54), um den Einlass des Wasserbehälters aufzunehmen, wenn die Vorderseite des Grundkörpers (10) geöffnet ist, wobei der Wassercontainer (54) entleerbar ist.

3. Heizgerät zum Garen nach Anspruch 2,
welches weiterhin eine lösbar mit dem Einlass des Wasserbehälters (51) verbundene Einlasswechseleinheit (60) mit einem Ventilelement (61) aufweist, welches zum Öffnen, wenn der Wasserbehälter (51) sich in dem Wassercontainer (54) befindet und Schließen, wenn der Wasserbehälter von dem Wassercontainer (54) getrennt ist, angeordnet ist.

4. Heizgerät zum Garen nach Anspruch 3,
wobei der Wassercontainer (54) aufweist:
einen innerhalb der inneren Oberfläche des Wassercontainers (54) angeordneten Träger (55) zum Tragen eines unteren Endes der Einlasswechseleinheit (60); und
einen an dem Träger (55) angeordneten Vorsprung (57) zum Betätigen des Ventilelements (61), um den Einlass des Wasserbehälters (51) zu öffnen, wenn der Wasserbehälter in den Wassercontainer (54) eingesetzt ist.

5. Heizgerät zum Garen nach Anspruch 3 oder 4,
wobei das Ventilelement (61) aufweist:
eine Ventilplatte (61a), die hin- und herbewegbar ist und dadurch einen Weg der Einlasswechseleinheit (60) öffnet und schließt; und
eine Trägerstange (61b), die eine bestimmte Länge hat und hin- und herbewegbar ist, wobei ein Ende der Trägerstange (61b) an der Ventilplatte (61a) befestigt ist, um die Ventilplatte (61a) zu tragen.

## Revendications

1. Appareil de chauffage pour la cuisson, comprenant :
- un corps principal (10) comprenant une chambre de cuisson (11);
- un dispositif de génération de vapeur (30) qui fonctionne pour alimenter de la vapeur dans la chambre de cuisson (11) ; et
- un dispositif d'alimentation d'eau (50) qui fonctionne pour alimenter de l'eau dans le dispositif de génération de vapeur (30), le dispositif d'alimentation d'eau (50) comprenant :
- une cuve d'eau (51) pour contenir l'eau ;
- un dispositif de support de cuve d'eau (52) installé sur le corps principal (10) pouvant être agencé pour supporter la cuve d'eau (51), et comprenant un espace pour maintenir une entrée de la cuve d'eau (51) de sorte que l'entrée est immergée dans l'eau lorsque la cuve d'eau (51) est insérée dans le dispositif de support de cuve d'eau (52) de sorte que l'entrée de la cuve d'eau (51) fait face à un fond du dispositif de support de cuve (52) ;
- une pompe d'alimentation d'eau (58) pouvant fonctionner pour alimenter l'eau du dispositif de support de cuve d'eau (52) jusqu'au dispositif de génération de vapeur ;
- des tuyaux d'alimentation d'eau (59) destinés à être utilisés pour guider l'eau du dispositif de support de cuve d'eau (52) jusqu'au dispositif de génération de vapeur (30) ; **caractérisé en ce qu'**il comprend en outre un capteur de poids (56) pour capter le poids de la cuve d'eau (51) lorsque la cuve d'eau est installée sur le dispositif de support de cuve d'eau (52).

2. Appareil de chauffage pour cuisson selon la revendication 1, dans lequel le dispositif de support de cuve d'eau (52) comprend :
- un élément de commutation (53) installé sur la partie supérieure de la surface avant du corps principal (10) pouvant être agencé pour ouvrir et fermer la surface avant du corps principal ; et
- un récipient d'eau (54) raccordé à une surface interne de l'élément de commutation (53) pour recevoir l'entrée de la cuve d'eau lorsque la surface avant du corps principal (10) est ouverte, le récipient d'eau (54) pouvant être vidangé.

3. Appareil de chauffage pour cuisson selon la revendication 2, comprenant en outre un dispositif de commutation d'entrée (60) fixé de manière détachable à l'entrée de la cuve d'eau (51), comprenant un élément de soupape (61) agencé pour s'ouvrir lorsque la cuve d'eau (51) est dans le récipient d'eau (54) et se fermer lorsque la cuve d'eau est séparée du récipient d'eau (54).

4. Appareil de chauffage pour cuisson selon la revendication 3, dans lequel le récipient d'eau (54) comprend :
- un dispositif de support (55) installé dans la surface interne du récipient d'eau (54) pour supporter une extrémité inférieure du dispositif de commutation d'entrée (60) ; et
- une saillie (57) formée sur le dispositif de support (55) agencé pour comprimer l'élément de soupape (61) afin d'ouvrir l'entrée de la cuve d'eau (51) lorsque la cuve d'eau est placée dans le récipient d'eau (54).

5. Appareil de chauffage pour cuisson selon la revendication 3 ou 4, dans lequel l'élément de soupape (61) comprend :
- un organe formant clapet (61a) agencé pour avancer et reculer et ouvrir et fermer ainsi un passage du dispositif de commutation d'entrée (60) ; et
- une tige de support (61b) ayant une longueur désignée et mobile d'avant en arrière, une extrémité de la tige de support (61b) étant fixée sur l'organe formant clapet (61a) afin de supporter l'organe formant clapet (61a).
